# EUROPEAN PATENT SPECIFICATION

(11) **EP 0 411 679 B1**
(45) Date of publication and mention of the grant of the patent: **01.05.1996**
(21) Application number: 90118649.4
(22) Date of filing: 22.07.1983
(51) Int. Cl.: G06F 9/38, G06F 9/32

(54) **Apparatus for dynamically adding a next address field to the instructions of a computer system.**
Rechner mit dynamischem Aufbau eines Befehlzusatzfeldes zur Speicherung der folgenden Befehlsadresse.
Calculateur ajoutant de façon dynamique un champ aux instructions, ledit champ contenant l'adresse de l'instruction lui succédant.

(30) Priority: 23.08.1982 US 410430
(43) Date of publication of application: 06.02.1991
(62) Divisional of application: 83902713.3
(73) Proprietor: WESTERN ELECTRIC COMPANY, INCORPORATED, New York, NY 10022 (US)
(72) Inventor: Ditzel, David Roger, Los Altos Hills CA 94022 (US); McLelland, Hubert Rae, Jr., Marietta, Georgia 30067 (US)
(74) Representative: Buckley, Christopher Simon Thirsk

(56) References cited:
- GB-A- 986 791
- US-A- 3 764 988
- US-A- 4 200 927
- US-A- 4 298 927

## Description

This invention relates to computers for reducing the execution time required for branch instructions.

Digital computers retrieve instructions and data from a memory device and execute the instructions in accordance with a program stored therein. The computer's repertoire of instructions comprises operational instructions, control type instructions or some combination thereof. Operational instructions perform some direct arithmetic or logical function. Control instructions direct the order of execution of instructions. Computer instructions are normally executed sequentially, as they are found in the computer's memory. Control instructions alter this otherwise sequential flow of control.

Instructions may be of variable size, that is, of variable length. The address of the next instruction to be executed is usually computed by adding the length of the current instruction to its address. The address of the instruction currently being executed is kept in a machine register, usually known as the program counter. A control instruction, that is, a branch or jump instruction, sets the program counter to a specified value. This value is the operand of the control instruction.

Branch instructions occur frequently in programs. In many programs, more than one-third of all instructions executed are branches. There are two types of branch instructions: unconditional and conditional. Unconditional branches always alter the flow of control by specifying in its operand the address of the next instruction. Conditional branches, on the other hand, alter the flow of control only when some specified condition is met. If the condition is not met, control is transferred to the next sequentially addressed instruction as if the branch had no effect. It is desirable to reduce execution time for branch instructions.

US-A-4298927 seeks to solve the problem of the waste of processor time that occurs while the processor accesses the memory, which operates relatively slowly, to read out the next instruction. The solution proposed is a prefetch circuit into which a plurality of instructions are read from the memory during processor idle periods. However the problem of reducing the execution time for branch instructions is not dealt with.

GB-A-986791 discloses the ability to perform delayed conditional operations, i.e., the selection of a location in program memory which depends on the result of an operation separated from the selection by a large number of operations. The address of a next instruction to be executed is stored in main memory as part of the content of every instruction. When an instruction is read, this address of the next instruction is stored in a selection register. In nonconditional operation, the contents of the selection register determines the address of the next instruction to be read from memory. In conditional operation, the address in the selection register is changed by address modification means under control of a generated signal.

According to this invention there is provided a computer as claimed in claim 1.

In an embodiment of the invention a next address field is dynamically added to instructions in an address pre-fetch unit after the instructions are fetched from memory but before they are transferred via an instruction cache to an execution unit. By adding the next address field to instructions before they are transferred to the instruction cache, the need for calculating the next instruction address after every transferral of an instruction from the instruction cache to the execution unit is eliminated.

In a further embodiment of the invention, the use of a next address field permits the elimination of branch instructions by including the target of a branch instruction as the next address field of the sequentially previous instruction, thereby making a separate transfer instruction unnecessary. This has the effect of speeding up the machine as if branch instructions were executed infinitely fast.

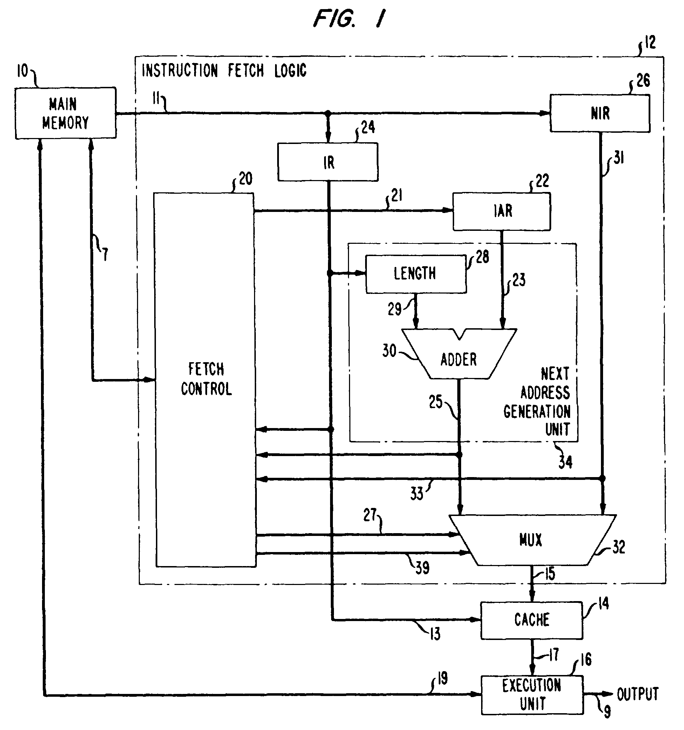

The invention will now be described by way of example with reference to the accompanying drawing in which FIG. 1 is a block diagram revealing relevant parts of a general purpose digital computer organized to take advantage of the present invention.

Referring to FIG. 1, there is shown a block diagram of a general purpose digital computer which is useful in realizing the advantages of the present invention. The digital computer of FIG. 1 comprises a main memory 10 which can be used to store both data and instructions. Instructions are fetched from memory 10 by the instruction fetch logic circuit 12 and stored in an instruction cache memory 14. In accordance with the present invention, to be described more fully hereinbelow, instruction fetch logic circuit 12 also generates a next instruction address and transfers the next instruction address to cache 14 over bus 15.

Cache 14 comprises a traditional computer memory cache, that is, a high speed buffer. Cache 14 is modified to provide extra storage space for the next instruction address. Instructions to be executed are transferred from cache 14 over bus 17 to execution unit 16. Data operands for instructions being executed are then transferred from main memory 10 over bus 19 to execution unit 16. Main memory 10, execution unit 16, and cache 14 operate in a traditional fashion and may be implemented in any one of several ways commonly employed by those skilled in the art. The output from execution unit 16 is transferred over bus 19, to main memory 10 or over bus 9 to a utilization means (not shown).

Referring, more particularly, to the instruction fetch logic circuit 12, there is shown an instruction address register (IAR) 22, known generally as a program counter. The instruction address register 22 holds the address of the instruction to be fetched. Under the direction of the fetch control logic circuit 20, which may be a finite state machine or which may comprise conventional combinational logic, an instruction is fetched from bin memory 10 over bus 11 and placed in instruction register (IR) 24.

The sequentially following instruction is also fetched from main memory 10 and placed in the next instruction register (NIR) 26. If the instruction in the next instruction register 26 is not a branch instruction, the next instruction address is computed by adding the length of the instruction in the instruction register 24 to the contents of the instruction address register 22.

The length of the instruction in the instruction register 24 is determined by the length unit 28 which comprises either a read only memory or a combinational logic circuit. The next instruction address is computed in adder 30 by adding the value of the length on bus 29 from the length unit 28 and the value of the current address on bus 23 from the instruction address register 22. The output from adder 30, appearing on bus 25, is then gated through multiplexor 32, in response to an enabling signal on lead 27, onto bus 15. Simultaneously therewith, the instruction in instruction register 24 is transferred via bus 13 to instruction cache 14. Thus, the instruction in instruction cache 14 comprises the instruction from instruction register 24 and the address of the next instrvction, placed in a next address field adjacent thereto, from adder 30.

In the situation where the instruction stored in the next instruction register 26 is a branch, however, the contents of the next address field therein are taken to be the target of the instruction stored in the next instruction register 26. The contents of the next instruction register 26 are transferred to instruction cache 14. This transfer is achieved by enabling lead 39 thereby causing multiplexor 32 to gate bus 31 to bus 15. Simultaneously therewith, the contents of instruction register 24 is transferred over bus 13 to instruction cache 14.

Thus, instruction cache 14 comprises an instruction and the address of the next instruction adjacent thereto. Because the next instruction register 26 holds a branch instruction, and because the contents thereof are transferred to instruction cache 14 and placed in the next address field, adjacent to the instruction therein, the next address field comprises the target of the branch address. By this means, the execution time required for a branch instruction is eliminated.

The present invention can be understood more clearly by referring to the following set of instructions:

| Instruction No. | Instruction |
|---|---|
| 1 | MOV A,B |
| 2 | ADD C,D |
| 3 | JMP 37. |

Initially, the address 1 is entered in the instruction address register 22. Thereafter, instruction 1, namely, "MOV A,B" is retrieved from main memory 10 and entered in instrvction register 24. The next sequential instruction, namely, "ADD C,D" is retrieved from main memory 10 and entered in the next instruction register 26. Because the instrvction entered in register 26 is not a branch, the address of the next sequential instruction, namely 2, is computed by adding the length of the current instruction in register 22. Thereafter, the instruction in register 24 and the address of the next instruction from adder 30 are simultaneously transferred to instruction cache 14 as stated hereinabove. The instruction entered in cache 14 appears as follows:

| Instruction | Next Address Field |
|---|---|
| MOV A,B | 2. |

Subsequently, the instruction address 2 is entered in register 22. The instruction 2, namely "ADD C,D," is retrieved from main memory 10 and entered in register 24. The next sequential instruction 3, namely "JMP 37" is retrieved from main memory 10 and entered in register 26. Because next instruction register 26 holds a branch instruction, the target of the branch namely "37" is transferred to instruction cache 14, along with the instruction from register 24. Thus, the instruction in cache 14 appears as follows:

| Instruction | Next Address Field |
|---|---|
| ADD C,D | 37. |

By this means, the execution time needed for retrieving the instruction 3, namely "JMP 37," from instruction cache 14 and associated time used by execution unit 16 is eliminated.

## Claims

1. A computer, comprising a main memory (10), an instruction fetch unit (12,14) coupled to the main memory for fetching instructions from the main memory prior to selection of the instructions for execution, and an execution unit (16) coupled to the instruction fetch unit for executing fetched instructions, and characterized in that the Instruction fetch unit comprises first receiving means (24) coupled to the main memory for receiving a first fetched instruction from the main memory, next address providing means (22,32,34) operating after the first fetched instruction has been fetched for providing a next address in the main memory of a next instruction to be executed immediately after the first fetched instruction, and retaining means (14) coupled to the first receiving means, the next address providing means, and the execution unit for associating the next address with the first fetched instruction and retaining the associated next address for use during execution of the first fetched instruction by the execution unit.

2. A computer as claimed in claim 1 wherein the length of a fetched instruction may vary, and the next address providing means comprises means (20,28,22,30) coupled to the first receiving means and responsive to the first fetched instruction for computing the next address by adding the length of the first fetched instruction to the address of the first fetched instruction.

3. A computer as claimed in claim 1 wherein the instruction belongs to a set of instructions which comprises a branch instruction which contains a branch address specifier specifying a branch address of another instruction, the instruction fetch unit comprises second receiving means (26) coupled to the main memory and to the next address providing means for receiving a second fetched instruction which immediately follows the first fetched instruction in the main memory, and, when the second fetched instruction is a branch instruction, the next address providing means serves to provide the branch address as the next address.

4. A computer as claimed in claim 3 wherein the length of a fetched instruction may vary, and the next address providing means comprises means (20,28,22,30,32) coupled to the first receiving means and to the second receiving means and responsive to the first fetched instruction and the second fetched instruction for computing the next address when the second fetched instruction is not a branch instruction by adding the length of the first fetched instruction to the address of the first fetched instruction.

5. A computer as claimed in any preceding claim wherein the retaining means serves to store one or more associated next addresses simultaneously.

## Patentansprüche

1. Rechner mit einem Arbeitsspeicher (10), einer an den Arbeitsspeicher angekoppelten Befehlsabrufeinheit (12, 14) zum Abrufen von Befehlen aus dem Arbeitsspeicher vor Auswahl der Befehle zur Ausführung, und einer an die Befehlsabrufeinheit angekoppelten Ausführungseinheit (16) zum Ausführen von abgerufenen Befehlen, dadurch gekennzeichnet, daß die Befehlsabrufeinheit folgendes umfaßt: erste an den Arbeitsspeicher angekoppelte Empfangsmittel (24) zum Empfangen eines ersten abgerufenen Befehls aus dem Arbeitsspeicher, Mittel zum Bereitstellen der nächsten Adresse (22, 32, 34), die nach Abrufen des ersten abgerufenen Befehls tätig sind, um im Arbeitsspeicher eine nächste Adresse eines nächsten, sofort nach dem ersten abgerufenen Befehl auszuführenden Befehls bereitzustellen, und an das erste Empfangsmittel, das Mittel zum Bereitstellen der nächsten Adresse und die Ausführungseinheit angekoppelte Haltemittel (14) zum Verbinden der nächsten Adresse mit dem ersten abgerufenen Befehl und Halten der zugehörigen nächsten Adresse zur Verwendung während der Ausführung des ersten abgerufenen Befehls durch die Ausführungseinheit.

2. Rechner nach Anspruch 1, wobei die Länge eines abgerufenen Befehls veränderlich sein kann und das Mittel zur Bereitstellung der nächsten Adresse an das erste Empfangsmittel angekoppelte und auf den ersten abgerufenen Befehl reagierende Mittel (20, 28, 22, 30) zum Berechnen der nächsten Adresse durch Hinzuaddieren der Länge des ersten abgerufenen Befehls zur Adresse des ersten abgerufenen Befehls umfaßt.

3. Rechner nach Anspruch 1, wobei der Befehl zu einer Befehlsmenge gehört, die einen Sprungbefehl umfaßt, der einen eine Sprungadresse eines weiteren Befehls spezifizierenden Sprungadressenspezifizierer enthält, die Befehlsabrufeinheit zweite, an den Arbeitsspeicher und an das Mittel zur Bereitstellung der nächsten Adresse angekoppelte Empfangsmittel (26) zum Empfangen eines zweiten, dem ersten abgerufenen Befehl im Arbeitsspeicher direkt folgenden abgerufenen Befehls umfaßt, und, wenn der zweite abgerufene Befehl ein Sprungbefehl ist, das Mittel zur Bereitstellung der nächsten Adresse dazu dient, die Sprungadreese als die nächste Adresse bereitzustellen.

4. Rechner nach Anspruch 3, wobei die Länge eines abgerufenen Befehls veränderlich sein kann und das Mittel zur Bereitstellung der nächsten Adresse an das erste Empfangsmittel und das zweite Empfangsmittel angekoppelte und auf den ersten abgerufenen Befehl und den zweiten abgerufenen Befehl reagierende Mittel (20, 28, 22, 30, 32) zum Berechnen der nächsten Adresse, wenn der zweite abgerufene Befehl kein Sprungbefehl ist, indem sie die Länge des ersten abgerufenen Befehls zur Adresse des ersten abgerufenen Befehls hinzuaddieren, umfaßt.

5. Rechner nach einem der vorhergehenden Ansprüche, wobei das Haltemittel zur gleichzeitigen Speicherung eines oder mehrerer zugehöriger nächster Adressen dient.

## Revendications

1. Calculateur, comprenant une mémoire principale (10), un organe d'extraction d'instructions (12,14) couplé à la mémoire principale pour extraire des instructions dans la mémoire principale avant la sélection des instructions d'exécution, et un organe d'exécution (16) couplé à l'organe d'extraction d'instructions pour exécuter les instructions extraites, et caractérisé en ce que l'organe d'extraction d'instructions comprend un premier moyen de réception (24) couplé à la mémoire principale pour recevoir une première instruction extraite à partir de la mémoire principale, un moyen de fourniture d'adresse suivante (22,32,34) fonctionnant après que la première instruction extraite ait été extraite pour fournir une adresse suivante dans la mémoire principale d'une instruction suivante devant être exécutée immédiatement après la première instruction extraite, et un moyen de retenue (14) couplé au premier moyen de réception, au moyen de fourniture d'adresse suivante, et à l'organe d'exécution pour associer l'adresse suivante à la première instruction extraite et retenant l'adresse suivante associée pour l'utiliser durant l'exécution de la première instruction extraite par l'organe d'exécution.

2. Calculateur selon la revendication 1, dans lequel la longueur d'une instruction extraite peut varier, et le moyen de fourniture d'adresse suivante comprend un moyen (20,28,22,30) couplé au premier moyen de réception et sensible à la première instruction extraite pour calculer l'adresse suivante en ajoutant la longueur de la première instruction extraite à l'adresse de la première instruction extraite.

3. Calculateur selon la revendication 1, dans lequel l'instruction appartient à un ensemble d'instructions qui comprend une instruction de branchement qui renferme un spécificateur d'adresse de branchement spécifiant une adresse de branchement d'une autre instruction, l'organe d'extraction d'instructions comprend un deuxième moyen de réception (26) couplé à la mémoire principale et au moyen de fourniture d'adresse suivante pour recevoir une deuxième instruction extraite qui suit immédiatement la première instruction extraite dans la mémoire principale, et, quand la deuxième instruction extraite est une instruction de branchement, le moyen de fourniture d'adresse suivante sert à fournir l'adresse de branchement comme adresse suivante.

4. Calculateur selon la revendication 3, dans lequel la longueur d'une instruction extraite peut varier, et le moyen de fourniture d'adresse suivante comprend un moyen (20,28,22,30,32) couplé au premier moyen de réception et au deuxième moyen de réception et sensible à la première instruction extraite et à la deuxième instruction extraite pour calculer l'adresse suivante quand la deuxième instruction extraite n'est pas une instruction de branchement en ajoutant la longueur de la première instruction extraite à l'adresse de la première instruction extraite.

5. Calculateur selon l'une quelconque des revendications précédentes, dans lequel le moyen de retenue sert à stocker simultanément une ou plusieurs adresses suivantes associées.
